# FASCICULE DE BREVET EUROPEEN

(11) **EP 2 957 104 B1**
(45) Date de publication et mention de la délivrance du brevet: **26.02.2020**
(21) Numéro de dépôt: 14704855.7
(22) Date de dépôt: 28.01.2014
(51) Int. Cl.: H04N 21/2662, H04L 29/06, H04N 21/647

(54) **PROCÉDÉ DE SÉLECTION DE LA REPRÉSENTATION DES SEGMENTS D'UN CONTENU MULTIMÉDIA TRANSMIS SUR UN RÉSEAU DE COMMUNICATION**
VERFAHREN ZUR AUSWAHL DER DARSTELLUNG VON SEGMENTEN EINES ÜBER EIN KOMMUNIKATIONSNETZWERK ÜBERTRAGENEN MULTIMEDIAINHALTS
METHOD FOR SELECTING THE REPRESENTATION OF THE SEGMENTS OF A MULTIMEDIA CONTENT TRANSMITTED OVER A COMMUNICATION NETWORK

(30) Priorité: 13.02.2013 FR 1351239
(43) Date de publication de la demande: 23.12.2015
(73) Titulaire: Orange, 75015 Paris (FR)
(72) Inventeur: BERTHELOT, Bertrand, 35230 Bourgbarre (FR); HOUZE, Patrice, 35000 Rennes (FR)
(86) Numéro de dépôt international: PCT/FR2014/050155
(87) Numéro de publication internationale: WO 2014/125184

(56) Documents cités:
- WO-A1-2011/087449
- US-A1- 2012 047 542
- US-A1- 2012 124 179
- WIM VAN LANCKER ET AL: "HTTP adaptive streaming with Media Fragment URIs", MULTIMEDIA AND EXPO (ICME), 2011 IEEE INTERNATIONAL CONFERENCE ON, IEEE, 11 juillet 2011 (2011-07-11), pages 1-6, XP031964825, DOI: 10.1109/ICME.2011.6012149 ISBN: 978-1-61284-348-3
- JIN YOUNG LEE ET AL: "DASH Evaluation Experiment #1: Compositions of Media Presentation (CMP) Proposal Comparison", 94. MPEG MEETING; 11-10-2010 - 15-10-2010; GUANGZHOU; (MOTION PICTURE EXPERT GROUP OR ISO/IEC JTC1/SC29/WG11),, no. M18009, 28 octobre 2010 (2010-10-28), XP030046599,
- "3rd Generation Partnership Project; Technical Specification Group Services and System Aspects; Packet-Switched Streaming Service (PSS) Improved Support for Dynamic Adaptive Streaming over HTTP in 3GPP (Release 11)", 3GPP DRAFT; TR26.938-040-IS-DASH-CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 février 2013 (2013-02-01), XP050687698, Extrait de l'Internet: URL:http://www.3gpp.org/ftp/tsg_sa/WG4_COD EC/TSGS4_72/Docs/ [extrait le 2013-02-01]

## Description

### Domaine technique

L'invention se rapporte à un procédé de sélection de la représentation des segments d'un contenu multimédia transmis sur un réseau de communication.

On entend par contenu multimédia tout contenu audio ou vidéo, ou plus généralement tout autre contenu numérique.

L'invention concerne plus spécifiquement la transmission et la réception de contenus multimédia sur un réseau, en particulier le téléchargement continu, aussi appelé *streaming,* de contenus multimédia sur un réseau.

Elle concerne plus précisément une communication utilisant des adresses universelles de contenus.

Elle s'applique notamment à tout terminal client (dans la suite appelé simplement terminal) capable de communiquer sur un réseau de télécommunications pour accéder à un contenu multimédia via une adresse universelle, aussi appelée URI (de l'anglais *Uniform Ressource identifier*)*.*

On entend ici par représentation d'un contenu, une façon particulière de créer un flux de données représentatif d'un contenu. Un flux de données créé avec un débit d'encodage est un exemple une représentation particulière du contenu.

### Etat de la technique

Pour accéder à un contenu multimédia, un terminal client a généralement recours à une adresse universelle, ou URI. Une telle adresse fournit à la fois un accès au contenu et des indications sur le protocole associé pour le consommer (par consommer, on entend par exemple, dans le cas d'un contenu vidéo, télécharger/recevoir le contenu pour ensuite éventuellement le décoder, puis le visualiser).

Une adresse URI est une chaîne de caractères identifiant une ressource physique ou abstraite. La syntaxe d'une adresse URI respecte un ensemble de normes édictées par l'IETF (*Internet Engineering Task Force*), et notamment la spécification RFC 3986 (spécification : *Uniform Resource Identifier (URI): Generic Syntax*)*.* Une telle adresse universelle prendra par exemple la forme dvb://contenu1, rtsp://contenu2, HTTP://contenu3, ftp://contenu4, etc.

L'accès au contenu multimédia est déclenché par une requête, au travers d'une adresse URI. Une illustration classique en est un service de vidéo à la demande :
- une première étape consiste pour le terminal à télécharger un document décrivant les paramètres d'accès au service (SDP pour *Session Description Protocol*) via un protocole HTTP (de l'anglais *Hyper Text Transport Protocol*)*,* un protocole de communication client-serveur développé pour les réseaux Internet et en particulier le Web ;
- lors d'une seconde étape, le service démarre effectivement, c'est-à-dire que le terminal client peut recevoir et afficher la vidéo, grâce aux informations fournies dans le document (dans cet exemple, le SDP). On notera que ce document peut être un fichier informatique ou un ensemble d'informations descriptives du contenu accessible à une certaine adresse.

Dans la suite, on se référera selon le contexte à l'expression « fichier de description » ou « document ». On notera que ce type d'accès au service peut nécessiter la présence d'un serveur (notamment dans le cas d'une communication point à point ou « unicast ») ou non (dans le cas d'une communication point vers multipoint de type « broadcast » ou « multicast »). Notamment, le protocole HTTP est de type point à point (« unicast »), et implique de ce fait la présence d'un serveur afin de traiter la requête d'un client dit client HTTP.

Il est fréquent, dans ce contexte du protocole HTTP, de recourir, pour échanger les données entre le client et le serveur, à une technique de type « HTTP adaptive streaming ». Ce type de technique permet notamment d'offrir une bonne expérience utilisateur tout en tenant compte par exemple des variations de bande passante sur la liaison entre le terminal client et le serveur de contenu. Classiquement, différentes qualités peuvent être encodées pour la même vidéo, correspondant par exemple à différents débits. Chaque débit est lui-même découpé en segments temporels (ou « fragments » de contenu). La description de ces différents débits et de la segmentation, ainsi que les fragments de contenu, sont mis à disposition du terminal client sur une plateforme de service. Pour pouvoir accéder au contenu complet, il est donc nécessaire de connaître de nombreuses adresses (URI) correspondant à de multiples segments.

Il existe plusieurs solutions pour faciliter la distribution d'un tel contenu en mode streaming. Ces méthodes proposent d'adresser au client un ou plusieurs fichiers de description intermédiaires, appelés aussi documents, ou manifests, ou encore ressources, contenant les adresses des différents segments aux différentes qualités du contenu multimédia. Le principe de base de ces méthodes est de mettre à disposition des contenus avec différentes variantes de débit, chacune des variantes étant disponible sous forme de segments contigus de données média qui sont téléchargeables par les clients à l'aide du protocole HTTP.

La lecture d'un contenu selon la technique « HTTP adaptative streaming » pour un terminal client donné consiste à :
- télécharger et analyser le document de description qui donne la description du contenu, les variantes de débits disponibles, et les moyens d'accéder aux segments de données pour chaque variante de débit ;
- télécharger les segments de données, et pour chaque segment sélectionner une représentation particulière, en particulier sélectionner un débit d'encodage du segment à télécharger ;
- puis analyser et rassembler les segments de données afin de les décoder pour lire le contenu.

Il existe deux modes de sélection (ou d'adaptation) de la représentation des segments.

Selon un premier mode, la sélection est à la charge du terminal client. Dans ce mode, c'est au terminal client de sélectionner la représentation pour chaque segment de données média en fonction de paramètres internes au client (ex : bande passante mesurée, capacités du terminal, etc.) ; en particulier, le terminal client sélectionne pour chaque segment un débit d'encodage donné. Si la bande passante mesurée par le client est suffisante, le client sélectionnera le plus souvent un débit d'encodage élevé. Cependant, le fait de laisser la décision d'adaptation uniquement au client empêche le distributeur de contenu d'avoir une maîtrise de sa plate-forme (serveurs), de son réseau, et des services. Le risque majeur pour le distributeur est d'avoir à servir un nombre trop élevé de requêtes d'accès aux segments avec un débit d'encodage élevé. La conséquence serait une saturation de la bande passante réseau ou des serveurs HTTP. Il peut également en résulter une baisse de la qualité de restitution sur le terminal client se manifestant par exemple par des gels d'image.

Selon un deuxième mode, la sélection est à la charge du serveur qui diffuse (ou distribue) le contenu sur le réseau. Dans cette configuration, une solution consiste en une insertion, dans les données d'un segment diffusé, d'une information relative à une demande de modification de la représentation, par exemple une demande de diminution du débit d'encodage. L'information peut être comprise dans un champ nommé « Event » décrite dans la norme MPEG DASH. MPEG DASH (pour Dynamic Adaptive Streaming over HTTP - norme ISO/IEC 23009-1:2012(E)) de l'organisme de normalisation ISO/IEC dédiée au streaming de contenus multimédia sur Internet ; Le problème lié à ce second mode est le temps de réaction pour mettre en œuvre l'adaptation côté client. En effet, le client réceptionne entièrement un segment de données, l'analyse entièrement avant de prendre connaissance le nouveau manifest incluant une demande de modification de la représentation des segments. Le problème est que le manifest, qui inclut la demande de modification, n'est pas pris en compte pour le segment courant reçu dans le même flux que la demande de modification. En conséquence, cette solution implique non seulement une opération d'extraction du nouveau manifest dans le segment reçu, mais aussi une restitution du segment reçu avec une mauvaise qualité.

La demande de brevet américaine US 2012/0124179 (déposant Realnetwork, Inc.) publiée le 17 mai 2012 offre une solution dans laquelle une requête d'accès à un segment selon une première représentation est suivie d'une réception d'une demande de redirection pour l'accès au même segment selon ue autre représentation choisie par le serveur.

L'invention offre une solution ne présentant pas les inconvénients de l'état de la technique.

### L'invention

A cet effet, selon un aspect fonctionnel, l'invention a pour objet un procédé de gestion selon la revendication 1.

Ainsi, la représentation des segments transmis par le serveur est toujours une représentation souhaitée par le serveur. Si un segment est reçu avec une représentation qui n'est pas une représentation souhaitée par le serveur, ce dernier, au lieu de transmettre le segment concerné, requiert au terminal client, par le biais de la demande de modification, une retransmission depuis le terminal d'un segment avec une autre représentation. Le serveur reçoit l'adresse URI avec la nouvelle représentation souhaitée ; ce n'est qu'à ce moment-là que serveur transmet le segment concerné vers le terminal avec la nouvelle représentation.

La demande de modification visée ci-dessus est transmise dans un message distinct du flux de données qui véhicule les segments. Il n'y a donc pas d'impact sur la qualité des segments reçus.

Aussi, en référence à une solution employée dans l'état de la technique, l'invention évite l'analyse d'un flux de données contenant les segments de données pour y extraire un nouveau fichier de description.

Selon un premier mode de réalisation, une représentation inclut une valeur de débit d'encodage du segment. Dans cette configuration, la première et la deuxième représentation incluent des valeurs différentes.

Selon un second mode de réalisation, la demande de modification de la première représentation est prise en compte par le terminal pendant une durée donnée. Le fait, pour le terminal, de prendre en compte la demande modification pendant un intervalle de temps donné, évite au serveur de contenus d'émettre une demande de modification plusieurs fois de suite.

Selon un troisième mode de réalisation, la demande de modification est transmise selon le protocole HTTP. Cette caractéristique évite une mise à jour complète du fichier de description. L'utilisation du protocole HTTP permet une écriture rapide de la demande de modification. Les segments étant transmis par exemple toutes les 2 secondes par le serveur, cette caractéristique évite une attente d'un nouveau manifest dont la fréquence de transmission depuis le serveur est plus importante, généralement de 30 secondes. Plus particulièrement, la demande est un message http comprenant un code numérique du type défini dans la norme RFC 2616. Le code numérique est reçu par le terminal client qui en déduit grâce à une table de correspondance une information, dans notre exemple une consigne liée à la représentation d'un segment.

Selon un aspect matériel, l'invention a trait à un terminal tel que défini dans la revendication 5.

Selon un autre aspect matériel, l'invention a trait à un programme d'ordinateur comportant des instructions de code qui, lorsque le programme est exécuté par un processeur réalise les étapes définies ci-dessus. L'invention a aussi trait au support d'enregistrement lisible par un terminal sur lequel est enregistré ce programme
Selon un autre aspect fonctionnel, l'invention a trait à un procédé d'émission de segments tel que défini dans la revendication 6.

Selon un autre aspect fonctionnel, l'invention a trait à un programme d'ordinateur comportant des instructions de code qui, lorsque le programme est exécuté par un processeur réalise les étapes définies dans le procédé d'émission décrit ci-dessus. L'invention a aussi trait au support d'enregistrement lisible par un serveur sur lequel est enregistré ce programme.

Selon un autre aspect matériel, l'invention a trait à un serveur tel que défini dans la revendication 6.

L'invention sera mieux comprise à la lecture de la description qui suit, donnée à titre d'exemple et faite en référence aux dessins annexés.

### Les figures:

La figure 1 représente une architecture de streaming basée sur l'utilisation du protocole HTTP sur Internet selon un mode de réalisation de l'invention.
Les figures 2 et 3 représentent les circuits des équipements impliqués dans le procédé de l'invention.
La figure 4 représente un chronogramme selon un mode de réalisation de l'invention.
La figure 5 représente également un chronogramme illustrant une variante du mode de réalisation décrit en référence à la figure 4.

### Description détaillée d'un exemple de réalisation illustrant l'invention

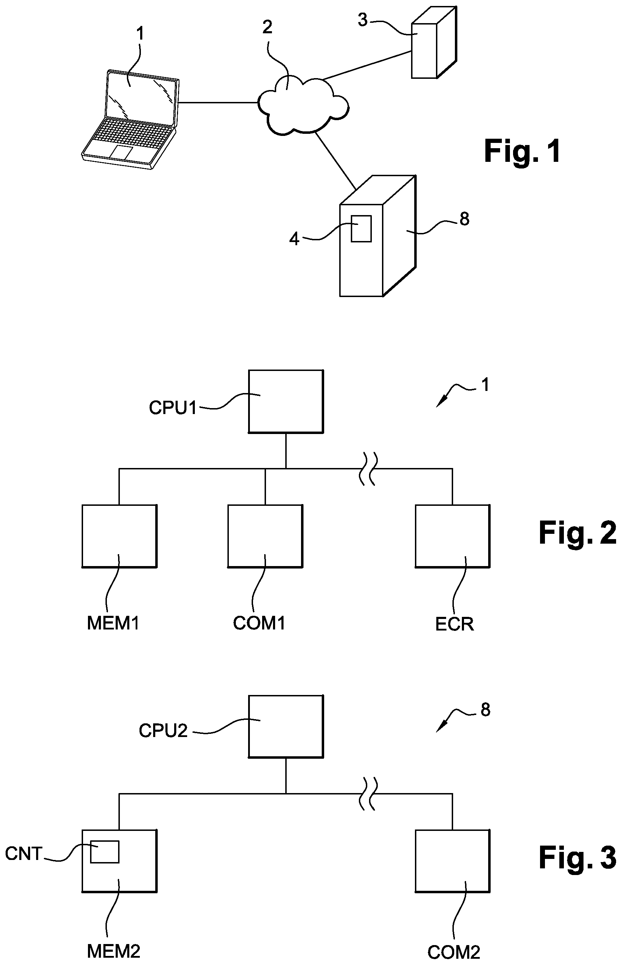

La figure 1 représente un système informatique SYS incluant un terminal client 1, une plateforme de service 3, et un serveur de contenus 8, apte à fournir un contenu sur requête du terminal client 1. Dans notre exemple de réalisation, le terminal, la plateforme et le serveur communique via un réseau Internet 2.

En référence à la figure 2, le terminal 1 comprend des ressources physiques et/ou logicielles, en particulier :
- un processeur CPU1,
- un premier module de stockage MEM1,
- un module de restitution tel qu'un écran ECR,
- un premier module de communication COM1 pour communiquer avec le réseau 2.

Les modules décrits ci-dessus ainsi que le premier microprocesseur CPU1 sont reliés entre eux par l'intermédiaire d'un premier bus BUS1.

En référence à la figure 3, le serveur 8 comprend
- un second processeur CPU2,
- un second module de stockage MEM2, stockant notamment un ou plusieurs contenus CNT,
- un second module de communication COM2 pour communiquer avec le réseau 2.

Le second module, inclus dans le serveur, est relié au second processeur CPU2 par l'intermédiaire d'un second bus BUS2.

A noter que les bus décrits ci-dessus ont pour fonction d'assurer le transfert de données numériques entre les différents circuits reliés au microprocesseur par un bus. Dans notre exemple, le bus en question inclut un bus de données et un bus de contrôle.

A noter aussi que, dans notre exemple, les mémoires décrites ci-dessus sont des mémoires permanentes accessibles en écriture et lecture, par exemple de type flash.

Les terminaux incluent également une mémoire vive (non représentée) respective pour stocker de manière non durable des données de calcul utilisées lors de la mise en œuvre d'un procédé selon des modes de réalisation. Ces mémoires ne sont pas représentées sur les dessins car inutiles pour l'exposé de l'invention.

Dans notre exemple, l'architecture choisie pour illustrer l'invention est une architecture dite *streaming* basée sur l'utilisation du protocole HTTP. Classiquement, le terminal client (1) souhaite entrer en communication avec un serveur de contenus (8) pour télécharger un contenu multimédia composé d'un ou plusieurs médias (audio, vidéo, etc.).

Dans la suite de l'exemple, comme exposé ci-dessus, on se positionne dans un contexte de streaming selon la norme MPEG DASH.

Le terminal (1) interroge tout d'abord une plateforme de service (3) pour obtenir l'adresse (ici, l'URL, mais de manière plus générale, une adresse universelle de type URI) du document de description 4 du contenu multimédia (y) ; dans la suite, ce document est un fichier de type MPD (y.mpd).

La plateforme de service (3) répond en fournissant au terminal l'adresse du fichier 4 ; dans l'exemple il s'agit de l'URL « HTTP://x.com/y.mpd » symbolisant un fichier y de type mpd qui peut être téléchargé sur le serveur de contenus (8) « x.com ».

Un exemple de fichier de description 4 conforme à la norme MPEG/DASH est présenté dans l'annexe 1. Les champs pertinents dans le contexte de l'invention, qui permettent notamment de générer les adresses universelles, sont présentés en italique.

Le fichier de description 4 permet de générer des adresses de segments de média

Cette construction met en œuvre un mécanisme préalable de résolution d'adresses universelles (URI) décrit dans la RFC 3986 mentionnée ci-dessus. Le terminal client doit interpréter certains champs et les modifier de manière appropriée pour construire la première adresse universelle (URL ou URI) du segment de média.

Cette résolution d'URI est faite selon l'élément *BaseURL,* qui peut être présent à différents niveaux de la hiérarchie du fichier 4.

Dans cet exemple, les adresses URL sont construites à l'aide des deux champs « BaseUrl » (« HTTP:// x.com/ » et « video/ ») et « SegmentTemplate ».

Le « SegmentTemplate » précisé par la norme MPEG/DASH est un procédé générique de construction des adresses (URI) intermédiaires à partir de différents identifiants, dans notre exemple :
- $Time$ : à remplacer par le temps de début du segment de média. Ce temps est fourni par la « SegmentTimeline » qui indique ici un offset de 180180 pour chaque début de nouveau segment ;
- $Number$ : à remplacer par le numéro d'ordre du segment de média désiré ;
- $Bandwidth$ : à remplacer par la valeur de l'attribut « bandwidth » (bande passante) de la représentation ciblée.

Ainsi, les deux premières adresses URL d'accès aux deux premiers segments vidéo pour une qualité (ou débit) de 500 kbps (Kilo Bits par seconde) sont ici :
1. HTTP://x.com/video/500000/0.mp4v, et
2. HTTP:// x.com/video/500000/180180.mp4v

A noter qu'à un même segment peut correspondre plusieurs représentations possibles. Ici, à chaque représentation correspond un débit respectif. Par exemple,
HTTP:// x.com/video/500000/0.mp4v
HTTP:// x.com/video/2000000/0.mp4v
sont deux représentations possibles du second segment, l'une correspondant à un débit de 500kbps l'autre à 2000kbps

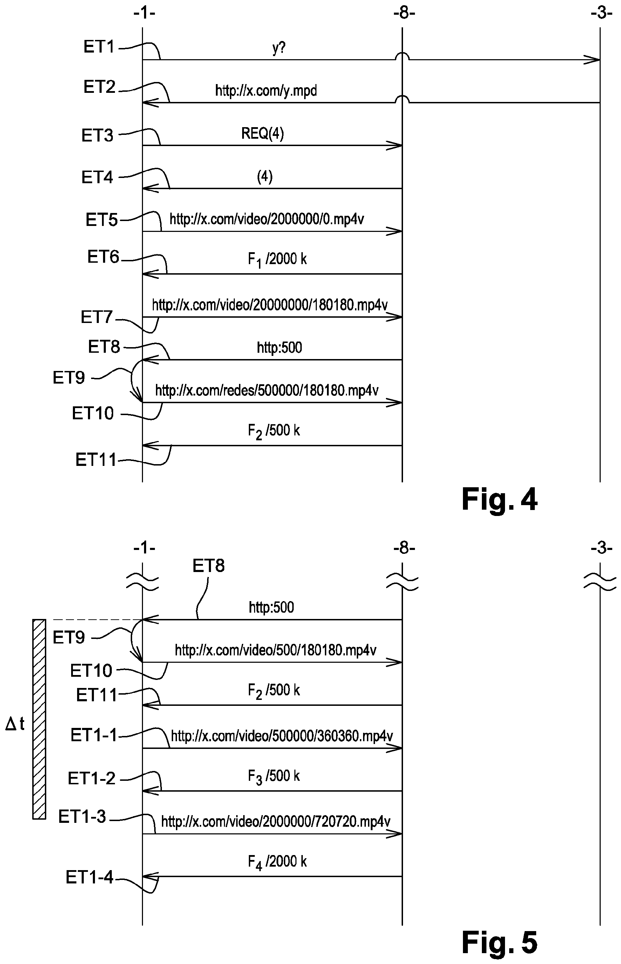

La figure 4 est une vue schématique des échanges ayant lieu entre le terminal, la plateforme et le serveur de contenus.

On suppose que le terminal 1 souhaite recevoir un contenu (y). On suppose aussi que suite à la transmission du deuxième segment, le serveur de contenus requiert une baisse du débit d'encodage et que celui-ci soit inférieur à 2000 kbps.

Lors d'une première étape ET1, le terminal 1 interroge la plateforme de service 3 pour obtenir l'adresse (ici, l'URL, mais de manière plus générale, une adresse universelle de type URI) du document de description 4 du contenu multimédia (y) ; dans la suite, ce document est un fichier de type MPD (y.mpd).

Lors d'une deuxième étape ET2, la plateforme de service (3) répond en fournissant au terminal l'adresse du fichier 4, dans l'exemple il s'agit de l'URL

### « HTTP://x.com/y.mpd »

symbolisant un contenu « y » de type « mpd » qui peut être téléchargé sur le serveur de contenus (8) « x.com ».

Lors d'une troisième étape ET3, le terminal requiert REQ(4) auprès du serveur 8 un téléchargement du fichier de description 4.

Lors d'une quatrième étape ET4, le terminal reçoit et stocke le fichier de description 4.

Lors d'une cinquième étape ET5, le terminal (1) accède au premier segment grâce à la première URL1 décrite ci-dessus :
HTTP:// x.com/video/2000000/0.mp4v.

Lors d'une sixième étape ET6, le serveur 8 transmet un premier flux de données F1/2000k, incluant les premiers segments. A réception, le terminal peut restituer les premiers segments.

Lors d'une septième étape ET7, le terminal (1) accède au second segment grâce à la seconde URL2 décrite ci-dessus :
HTTP:// x.com/video/2000000/180180.mp4v.

A réception de la demande de téléchargement du second segment, lors d'une huitième étape ET8, le serveur 8 transmet au terminal 1 une demande de modification du débit d'encodage. Dans l'invention, la demande est incluse dans un message distinct du flux de données incluant les segments. La demande est illustrée au moyen d'une information requérant au terminal une diminution du débit d'encodage pour ce second segment. L'information est par exemple insérée dans un message d'erreur de type http.

Le message d'erreur est par exemple le suivant :

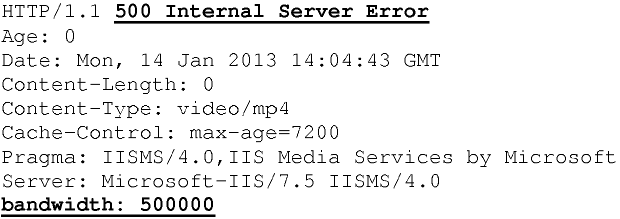

Supposons que l'information en question soit une valeur donnée d'un débit par exemple 500000 bps. Cette valeur peut être fournie dans le message d'erreur ou déduit par le terminal client à partir d'une base de correspondance par exemple stockée dans la première mémoire MEM1. Dans ce cas, à un code correspond non seulement une demande de modification de la représentation mais aussi une valeur donnée. Dans notre exemple, à la valeur 500 correspondrait la valeur de débit de 500kbps.

Lors d'une neuvième étape ET9, le terminal 1 reçoit le message d'erreur ; le terminal interprète le code « 500 » et en déduit que le message est lié à une demande de modification de débit d'encodage. Le terminal interprète également l'information de diminution/limitation de débit d'encodage afin d'appliquer cette diminution par la suite.

Lors d'une dixième étape ET10, le terminal 1 modifie l'adresse pour accéder au second segment en prenant en compte l'information reçue lors de la sixième étape. La nouvelle adresse résultante est donc dans notre exemple: HTTP:// x.com/video/500000/180180.mp4v.

Le serveur de contenus reçoit la nouvelle demande d'accès au second segment avec un débit d'encodage à 500 kbps.

Lors d'une onzième étape ET11, le serveur de contenus transmet un flux de données F2/500k incluant le segment avec un débit d'encodage à 500kbps. Le terminal reçoit ensuite le second segment et le restitue.

Le procédé décrit ci-dessus peut faire l'objet de variantes.

L'information décrite peut prendre plusieurs formes. Elle peut, dans un mode de réalisation ne faisant pas partie de l'invention revendiquée, avoir une valeur fixe comme dans l'exemple décrit ci-dessus.

Elle correspond, dans le cas de l'invention, à une valeur maximum à ne pas dépasser. Dans cette configuration, en supposant que l'information indique que le débit ne doit pas dépasser 1000kbps, la nouvelle adresse résultante à la huitième étape inclurait une valeur de débit inférieure à 1000kbps.

Dans l'exemple qui précède l'information est incluse dans un message d'erreur HTTP. L'invention ne se limité bien évidemment pas au protocole HTTP mais peut s'étendre à tout autres protocoles.

L'information peut aussi avoir une durée de vie limitée Δt. Cette variante est illustrée sur la figure 5. Sur cette figure, Les étapes ET1 à ET7 (non référencées) correspondent à celles décrites en référence à la figure 4. Les étapes ET8 à ET11 (représentées sur la figure 5) sont également identiques à celles décrites sur la figure 4.

La suite des étapes sont référencées ET1-1 à ET1-4.

Lors de l'étape ET1-1, le terminal (1) accède au troisième segment. La durée Δt n'ayant pas expiré, le terminal 1 tient compte de la demande de modification du débit reçue à la huitième étape ET8 et transmet la requête grâce à la première URL suivante décrite ci-dessus :
HTTP:// x.com/video/500000/360360.mp4v.

Lors d'une deuxième étape ET1-2, le serveur de contenus 8 transmet un troisième flux de données F3/500k incluant le segment avec un débit d'encodage à 500kbps. Le terminal reçoit ensuite le troisième segment et le restitue.

Lors de l'étape ET1-3, le terminal (1) accède au quatrième segment. La durée Δt ayant expiré, le terminal 1 ne tient plus compte de la demande de modification du débit reçue à la huitième étape ET8. Le terminal consulte de nouveau le fichier de description afin de créer l'adresse URL du quatrième segment :
HTTP:// x.com/video/2000000/720720.mp4v.

Lors de l'étape ET1-4, le serveur de contenus 8 transmet un flux de données F3/2000k incluant des segments avec un débit d'encodage à 2000kbps. Le terminal 1 reçoit ensuite les segments et les restitue.

Dans notre exemple, le message d'erreur inclut un code, voire plusieurs codes, indiquant le débit à utiliser et la durée Δt pendant laquelle ce débit doit être pris en compte.

A expiration de la durée Δt, les adresses qui suivent se basent à nouveau sur le fichier de description 4 et sur les représentations ou débits initialement disponibles initialement à l'établissement de la session.

Il va de soi que le mode de réalisation qui a été décrit ci-dessus a été donné à titre purement indicatif et nullement limitatif, et que de nombreuses modifications peuvent y être facilement apportées par l'homme de l'art sans pour autant sortir du cadre de l'invention.

A noter que pour la réalisation du procédé de l'invention, le terminal comprend, outre les éléments décrits ci-dessus en référence à la figure 2,
- un premier module de transmission d'une requête d'accès à un premier segment selon une première représentation choisie,
- un premier module de réception d'une réponse à la requête incluant une demande de modification de la première représentation,
- un deuxième module de transmission d'une requête d'accès au premier segment selon une deuxième représentation ;
- un deuxième module de réception depuis le serveur du premier segment selon la deuxième représentation.

A noter aussi que pour la réalisation du procédé de l'invention, le serveur comprend, outre les éléments décrits ci-dessus en référence à la figure 3,
- un premier module de réception d'une requête d'accès à un premier segment selon une première représentation choisie,
- un premier module de transmission d'une réponse à la requête incluant une demande de modification de la première représentation ;
- un deuxième module de réception d'une requête d'accès au premier segment selon une deuxième représentation ;
- un module de transmission du premier segment selon la deuxième représentation.

A noter que le te terme « module » utilisé dans ce document, peut correspondre soit à un composant logiciel, soit à un composant matériel, soit encore à un ensemble de composants matériels et/ou logiciels, aptes à mettre en œuvre la ou les fonctions décrites pour le module.

### Annexe 1

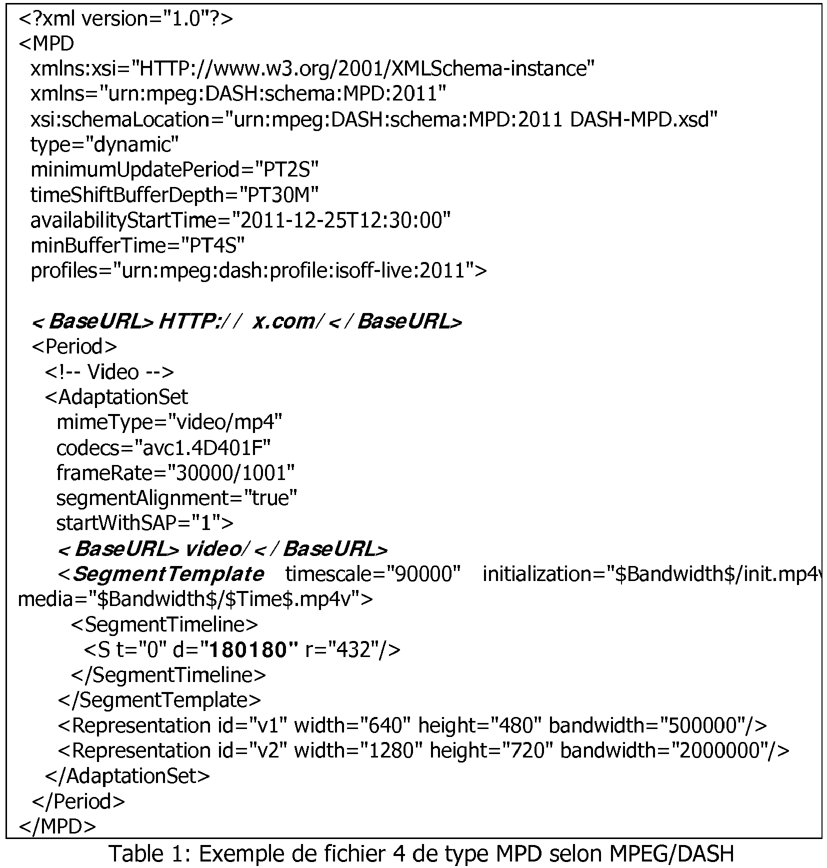

## Revendications

1. Procédé de gestion de la représentation des segments de données (0.mp4v, 180180.mp4v) d'un contenu reçu par un terminal depuis un serveur, le procédé comportant une étape préalable d'obtention (ET2) d'un document à partir duquel sont générées des adresses universelles, à une adresse étant associée une représentation du segment concerné parmi plusieurs représentations décrites dans le document associées à des débits d'encodage, le segment étant apte à être reçu depuis le serveur selon la représentation choisie, **caractérisé en ce qu'**il comprend les étapes suivantes au niveau du terminal,
- une première étape de transmission (ET7) au serveur d'une requête d'accès à un premier segment selon une première représentation choisie,
- une première étape de réception (ET8) depuis le serveur d'une réponse à la requête incluant une demande de modification de la première représentation la demande de modification étant incluse dans un message distinct du flux de données incluant des segments et incluant une information visant une valeur maximum de débit à ne pas dépasser pour l'accès au premier segment
- une étape de modification de la requête d'accès au cours de laquelle le terminal modifie la requête d'accès en sélectionnant, dans le document reçu lors de l'étape préalable (ET2), pour le premier segment une deuxième représentation associée à un débit d'encodage d'une valeur inférieure à ladite valeur maximum,,
- une deuxième étape de transmission (ET10) d'une requête d'accès au premier segment selon la deuxième représentation ;
- une deuxième étape de réception (ET11) depuis le serveur du premier segment selon la deuxième représentation.

2. Procédé de gestion selon la revendication 1, **caractérisé en ce qu'**une représentation inclut une valeur de débit d'encodage du segment et **en ce que** la première et la deuxième représentation incluent des valeurs différentes.

3. Procédé selon la revendication 1, **caractérisé en ce que** la modification de la première représentation est prise en compte par le terminal pendant une durée donnée (Δt).

4. Procédé selon la revendication 1, **caractérisé en ce que** la demande de modification est transmise selon le protocole HTTP.

5. Terminal (1) apte à recevoir des segments d'un contenu stockés sur un serveur, le terminal ayant accès un document (4) à partir duquel sont générées des adresses universelles, à une adresse étant associée une représentation d'un segment concerné parmi plusieurs représentations décrites dans le document associées à des débits d'encodage, **caractérisé en ce qu'**il comprend
- un premier module de transmission d'une requête d'accès à un premier segment selon une première représentation choisie,
- une premier module de réception d'une réponse issue du serveur à la requête incluant une demande de modification de la première représentation, la demande de modification étant incluse dans un message distinct du flux de données incluant des segments et incluant une information visant une valeur maximum de débit à ne pas dépasser pour le premier segment ;
- un module de modification de la requête d'accès apte à modifier la requête d'accès en sélectionnant, dans le document, pour le premier segment une deuxième représentation associée à un débit d'encodage d'une valeur inférieure à ladite valeur maximum ;- un deuxième module de transmission au serveur d'une requête d'accès au premier segment selon la deuxième représentation ;
- un deuxième module de réception depuis le serveur du premier segment selon la deuxième représentation.

6. Procédé d'émission, par un serveur, de segments d'un contenu selon une représentation respective donnée associée à un débit d'encodage donné, **caractérisé en ce qu'**il comprend les étapes suivantes :
- une première étape de réception d'une requête d'accès issue d'un terminal à un premier segment selon une première représentation choisie,
- une première étape de transmission d'une réponse à la requête incluant une demande de modification de la première représentation, la demande de modification étant incluse dans un message distinct du flux de données incluant les segments et incluant une information visant une valeur maximum de débit d'encodage à ne pas dépasser pour l'accès au premier segment;
- une deuxième étape de réception d'une requête d'accès au premier segment selon une deuxième représentation choisie par le terminal ;
- une deuxième étape d'émission depuis le serveur du premier segment selon la deuxième représentation demandée.

7. Serveur (8) apte à émettre des segments d'un contenu sur un réseau, **caractérisé en ce qu'**il comprend
- un premier module de réception d'une requête d'accès issue d'un terminal à un premier segment selon une première représentation choisie,
- un premier module de transmission d'une réponse à la requête incluant une demande de modification de la première représentation, la demande de modification étant incluse dans un message distinct du flux de données incluant les segments et incluant une information visant une valeur maximum de débit d'encodage à ne pas dépasser pour l'accès au premier segment
- un deuxième module de réception d'une requête d'accès au premier segment selon une deuxième représentation choisie par le terminal ;
- un module de transmission du premier segment selon la deuxième représentation demandée.

8. Programme d'ordinateur comportant des instructions de code qui, lorsque le programme est exécuté par un processeur réalise les étapes définies dans l'une des revendications 1 à 4.

9. Programme d'ordinateur comportant des instructions de code qui, lorsque le programme est exécuté par un processeur réalise les étapes définies dans la revendication 6.

## Patentansprüche

1. Verfahren zur Verwaltung der Darstellung der Datensegmente (0.mp4v, 180180.mp4v) eines Inhalts, der durch ein Endgerät von einem Server empfangen wird, wobei das Verfahren einen vorausgehenden Schritt der Gewinnung (ET2) eines Dokuments umfasst, aus welchem universelle Adressen erzeugt werden, wobei einer Adresse eine Darstellung des betreffenden Segments aus mehreren in dem Dokument beschriebenen Darstellungen, die Codierraten zugeordnet sind, zugeordnet ist, wobei das Segment geeignet ist, vom Server gemäß der gewählten Darstellung empfangen zu werden, **dadurch gekennzeichnet, dass** es die folgenden Schritte am Endgerät umfasst:
- einen ersten Schritt der Übertragung (ET7), an den Server, einer Zugriffsanforderung auf ein erstes Segment gemäß einer gewählten ersten Darstellung;
- einen ersten Schritt des Empfangs (ET8), von dem Server, einer Antwort auf die Anforderung, die eine Aufforderung zur Änderung der ersten Darstellung enthält, wobei die Aufforderung zur Änderung in einer separaten Nachricht des Datenstroms enthalten ist, die Segmente enthält und eine Information enthält, die einen nicht zu überschreitenden maximalen Wert der Rate für den Zugriff auf das erste Segment angibt;
- einen Schritt der Änderung der Zugriffsanforderung, in welchem das Endgerät die Zugriffsanforderung ändert, indem es in dem Dokument, das in dem vorausgehenden Schritt (ET2) empfangen wurde, für das erste Segment eine zweite Darstellung wählt, die einer Codierrate mit einem Wert zugeordnet ist, der niedriger als der maximale Wert ist;
- einen zweiten Schritt der Übertragung (ET10) einer Zugriffsanforderung auf das erste Segment gemäß der zweiten Darstellung;
- einen zweiten Schritt des Empfangs (ET11), von dem Server, des ersten Segments gemäß der zweiten Darstellung.

2. Verfahren zur Verwaltung nach Anspruch 1, **dadurch gekennzeichnet, dass** eine Darstellung einen Wert der Codierrate des Segments enthält, und dadurch, dass die erste und die zweite Darstellung unterschiedliche Werte enthalten.

3. Verfahren nach Anspruch 1, **dadurch gekennzeichnet, dass** die Änderung der ersten Darstellung von dem Endgerät während einer gegebenen Dauer (Δt) berücksichtigt wird.

4. Verfahren nach Anspruch 1, **dadurch gekennzeichnet, dass** die Aufforderung zur Änderung gemäß dem Protokoll HTTP übertragen wird.

5. Endgerät (1), welches in der Lage ist, auf einem Server gespeicherte Segmente eines Inhalts zu empfangen, wobei das Endgerät Zugang zu einem Dokument (4) hat, aus welchem universelle Adressen erzeugt werden, wobei einer Adresse eine Darstellung eines betreffenden Segments aus mehreren in dem Dokument beschriebenen Darstellungen, die Codierraten zugeordnet sind, zugeordnet ist, **dadurch gekennzeichnet, dass** es umfasst:
- ein erstes Modul zur Übertragung einer Zugriffsanforderung auf ein erstes Segment gemäß einer gewählten ersten Darstellung;
- ein erstes Modul zum Empfang einer von dem Server gesendeten Antwort auf die Anforderung, die eine Aufforderung zur Änderung der ersten Darstellung enthält, wobei die Aufforderung zur Änderung in einer separaten Nachricht des Datenstroms enthalten ist, die Segmente enthält und eine Information enthält, die einen nicht zu überschreitenden maximalen Wert der Rate für das erste Segment angibt;
- ein Modul zur Änderung der Zugriffsanforderung, das in der Lage ist, die Zugriffsanforderung zu ändern, indem es in dem Dokument für das erste Segment eine zweite Darstellung wählt, die einer Codierrate mit einem Wert zugeordnet ist, der niedriger als der maximale Wert ist;
- ein zweites Modul zur Übertragung einer Zugriffsanforderung auf das erste Segment gemäß der zweiten Darstellung an den Server;
- ein zweites Modul zum Empfang des ersten Segments gemäß der zweiten Darstellung vom Server.

6. Verfahren zum Senden, durch einen Server, von Segmenten eines Inhalts gemäß einer gegebenen jeweiligen Darstellung, die einer gegebenen Codierrate zugeordnet ist, **dadurch gekennzeichnet, dass** es die folgenden Schritte umfasst:
- einen ersten Schritt des Empfangs einer von einem Endgerät gesendeten Zugriffsanforderung auf ein erstes Segment gemäß einer gewählten ersten Darstellung;
- einen ersten Schritt der Übertragung einer Antwort auf die Anforderung, die eine Aufforderung zur Änderung der ersten Darstellung enthält, wobei die Aufforderung zur Änderung in einer separaten Nachricht des Datenstroms enthalten ist, die Segmente enthält und eine Information enthält, die einen nicht zu überschreitenden maximalen Wert der Codierrate für den Zugriff auf das erste Segment angibt;
- einen zweiten Schritt des Empfangs einer Zugriffsanforderung auf das erste Segment gemäß einer von dem Endgerät gewählten zweiten Darstellung;
- einen zweiten Schritt des Sendens, durch den Server, des ersten Segments gemäß der geforderten zweiten Darstellung.

7. Server (8), welcher in der Lage ist, Segmente eines Inhalts in einem Netz zu senden, **dadurch gekennzeichnet, dass** er umfasst:
- ein erstes Modul zum Empfang einer von einem Endgerät gesendeten Zugriffsanforderung auf ein erstes Segment gemäß einer gewählten ersten Darstellung;
- ein erstes Modul zur Übertragung einer Antwort auf die Anforderung, die eine Aufforderung zur Änderung der ersten Darstellung enthält, wobei die Aufforderung zur Änderung in einer separaten Nachricht des Datenstroms enthalten ist, die Segmente enthält und eine Information enthält, die einen nicht zu überschreitenden maximalen Wert der Codierrate für den Zugriff auf das erste Segment angibt;
- ein zweites Modul zum Empfang einer Zugriffsanforderung auf das erste Segment gemäß einer von dem Endgerät gewählten zweiten Darstellung;
- ein Modul zur Übertragung des ersten Segments gemäß der geforderten zweiten Darstellung.

8. Computerprogramm, welches Codeanweisungen umfasst, die, wenn das Programm von einem Prozessor ausgeführt wird, die in einem der Ansprüche 1 bis 4 definierten Schritte ausführen.

9. Computerprogramm, welches Codeanweisungen umfasst, die, wenn das Programm von einem Prozessor ausgeführt wird, die in Anspruch 6 definierten Schritte ausführen.

## Claims

1. Method for managing the representation of the data segments (0.mp4v, 180180.mp4v) of a content received by a terminal from a server, the method comprising a prior step (ET2) of obtaining a document on the basis of which are generated universal addresses, with an address there being associated a representation of the segment concerned from among several representations described in the document that are associated with encoding bitrates, the segment being able to be received from the server according to the chosen representation, **characterized in that** it comprises the following steps at the level of the terminal,
- a first step of transmitting (ET7) to the server a request for access to a first segment according to a first chosen representation,
- a first step of receiving (ET8) from the server a response to the request including a demand for modification of the first representation, the demand for modification being included in a distinct message of the data stream including segments and including an item of information targeting a maximum value of bitrate not to be exceeded for access to the first segment;
- a step of modifying the access request during which the terminal modifies the request for access by selecting, in the document received during the prior step (ET2), for the first segment a second representation associated with an encoding bitrate of a value less than said maximum value;
- a second step of transmitting (ET10) a request for access to the first segment according to the second representation;
- a second step of receiving (ET11) from the server the first segment according to the second representation.

2. Management method according to Claim 1, **characterized in that** a representation includes an encoding bitrate value for the segment and **in that** the first and the second representation include different values.

3. Method according to Claim 1, **characterized in that** the modification of the first representation is taken into account by the terminal for a given duration (Δt).

4. Method according to Claim 1, **characterized in that** the modification demand is transmitted according to the HTTP protocol.

5. Terminal (1) able to receive segments of a content which are stored on a server, the terminal having access to a document (4) on the basis of which are generated universal addresses, with an address there being associated a representation of a segment concerned from among several representations described in the document that are associated with encoding bitrates, **characterized in that** it comprises
- a first module for transmitting a request for access to a first segment according to a first chosen representation,
- a first module for receiving a response emanating from the server to the request including a demand for modification of the first representation, the demand for modification being included in a distinct message of the data stream including segments and including an item of information targeting a maximum value of bitrate not to be exceeded for the first segment;
- a module for modifying the access request able to modify the access request by selecting, in the document, for the first segment a second representation associated with an encoding bitrate of a value less than said maximum value; - a second module for transmitting to the server a request for access to the first segment according to the second representation;
- a second module for receiving from the server the first segment according to the second representation.

6. Method of sending, by a server, segments of a content according to a given respective representation associated with a given encoding bitrate, **characterized in that** it comprises the following steps:
- a first step of receiving a request emanating from a terminal for access to a first segment according to a first chosen representation,
- a first step of transmitting a response to the request including a demand for modification of the first representation, the demand for modification being included in a distinct message of the data stream including segments and including an item of information targeting a maximum value of bitrate not to be exceeded for access to the first segment;
- a second step of receiving a request for access to the first segment according to a second representation chosen by the terminal;
- a second step of sending from the server the first segment according to the second representation demanded.

7. Server (8) able to send segments of a content over a network, **characterized in that** it comprises
- a first module for receiving a request emanating from a terminal for access to a first segment according to a first chosen representation,
- a first module for transmitting a response to the request including a demand for modification of the first representation, the demand for modification being included in a distinct message of the data stream including segments and including an item of information targeting a maximum value of encoding bitrate not to be exceeded for access to the first segment;
- a second module for receiving a request for access to the first segment according to a second representation chosen by the terminal;
- a module for transmitting the first segment according to the second representation demanded.

8. Computer program comprising code instructions which, when the program is executed by a processor, carries out the steps defined in one of Claims 1 to 4.

9. Computer program comprising code instructions which, when the program is executed by a processor, carries out the steps defined in Claim 6.
